# EUROPÄISCHE PATENTSCHRIFT

(11) **EP 1 767 477 B1**
(45) Veröffentlichungstag und Bekanntmachung des Hinweises auf die Patenterteilung: **14.04.2010**
(21) Anmeldenummer: 06019430.5
(22) Anmeldetag: 16.09.2006
(51) Int. Cl.: B65H 3/32

(54) **Verfahren zum Betrieb und Einleggreifer zum Einlegen von flächigem Gut in Verarbeitungsmaschinen**
Method and apparatus to insert flat articles into a processing machine
Procédé et appareil pour l'insertion d'articles plats dans une machine de traitement

(30) Priorität: 21.09.2005 DE 102005045215
(43) Veröffentlichungstag der Anmeldung: 28.03.2007
(73) Patentinhaber: Müller, Hermann, 88279 Amtzell (DE)
(72) Erfinder: Müller, Hermann, 88276 Berg (DE); Steinhauser, Dieter, 88287 Grünkraut (DE)
(74) Vertreter: Riebling, Peter

(56) Entgegenhaltungen:
- EP-A1- 0 583 600
- DE-A1- 3 024 133
- DE-A1- 3 300 329
- DE-A1- 10 013 417
- DE-C1- 4 317 283
- GB-A- 2 092 116
- JP-A- 6 171 762
- US-A- 5 242 262

## Beschreibung

Die Erfindung betrifft ein Verfahren und ein nach dem Verfahren arbeitenden Einleggreifer zum Einlegen von flächigem Gut in Verarbeitungsmaschinen nach dem Oberbegriff des Patentanspruchs 1.

Ein derartiger Einleggreifer ist nach dem Gegenstand der DE 100 13 417 C2 bekannt geworden. Bei diesen bekannten Einleggreifer handelt es sich um eine Vorrichtung zum Palletieren von aus einer Kartonagenfertigungsmaschine austretenden, zu mehreren zu einem Kartonagenbündel übereinandergelegten Kartonagen.

Der dort gezeigte Greifer fungiert jedoch nicht als Einleggreifer, sondern als Palletiergreifer, der die Aufgabe hat, einen Kartonagenstapel zu ergreifen, auszurichten und diesen Kartonagenstapel an einer bestimmten Stelle der Verarbeitungseinrichtung abzulegen.

Bei dieser bekannten Ausführung ist bekannt, dass beim Herausziehen des Gabelauslegers (später auch Gabel genannt) die Gleitreibungskräfte zwischen dem Gabelausleger und den unmittelbar darunter- und darüberliegenden Kartonagen zu verhindern.

Zu diesem Zweck offenbart diese Druckschrift, dass jeder Gabelausleger auf seine Ober- und Unterseite mit Gewebegurten oder -riemen versehen ist, die sich in Längsrichtung der Ausleger erstrecken, an deren vorderen Enden umgelenkt sind und mittels einer auf die umgelenkten Enden einwirkenden Straffeinrichtung gestrafft gehalten werden.

Die Gewebegurte oder -riemen bewirken, dass bei einer Bewegung der Ausleger keine Relativbewegung zwischen der Oberseite des oberen Gurtes und der darauf aufliegenden Kartonage beziehungsweise zwischen der unter den Gabelauslegern befindliche Kartonage unter der daraufliegenden Unterseite des unteren Gurtes stattfindet.

Mit der gegebenen technischen Lehre wird also eine Relativbewegung zwischen dem abzulegenden Kartonagengut und dem Ausleger verhindert.

Es ist jedoch mit dieser Technik nicht möglich, empfindliches, flächiges Gut schonend und beschädigungsfrei von einem Stapel zu entnehmen, als Teilstapel zu vereinzeln und diesen vereinzelten Teilstapel auf einen anderen Stapel aufzulegen.

Es muss immer noch mit Beschädigungen des empfindlichen, flächigen Gutes gerechnet werden, wenn es sich lediglich um eine passiven Antrieb der Gurte oder Riemen an den Auslegern handelt.

Mit der Druckschrift DE 30 24 133 A1 wird eine Förder- und/oder Stapelvorrichtung mit einem Transportrahmen und einem flachen, auskragenden Tragorgan für leicht verformbare Güter, wie z.B. Zeitschriften offenbar, wobei das Tragorgan von einem in dessen Ziehrichtung geführten Band umgeben ist, die mit einem Mitnehmer verbunden sind und dessen oberes Trum nahe dem äußeren Rand des Transportgutes feststellbar ist.
Dieser Druckschrift ist nicht zu entnehmen, dass die Vorschubgeschwindigkeit des Tragorgans mit der Vorschubgeschwindigkeit des Roboterarmes synchronisierbar sind.

Mit der Druckschrift JP 06 171762 A wird eine Greifvorrichtung mit einem oberen, horizontal verschiebbaren Greifarm und einem am oberen Greifarm angeordneten, bewegbaren Mitnehmer offenbart, wobei die Greifvorrichtung einen unteren, schräg verlaufenden Ausleger aufweist, der mit beweglichen Gurten versehen ist, wobei der Mitnehmer auf den zu fördernden Gegenstand aufliegt und der obere Greifarm mittels einer horizontalen Bewegung den Gegenstand auf die Gurtoberflächen des unteren Auslegers verschiebt.
Dieser Druckschrift ist nicht zu entnehmen, dass der bewegbare Mitnehmer mit den Gurten des unteren Auslegers verbunden ist, wodurch die Geschwindigkeit des Mitnehmers nicht mit der Geschwindigkeit der Gurte synchronisiert ist.

Der Erfindung liegt deshalb die Aufgabe zugrunde einen Einleggreifer der eingangs genannten Art so weiterzubilden, dass der Mitnehmer relativ bewegbar zum Roboter ist und diese Bewegung mit der Bewegung der Gurte synchronisiert ist, um eine wesentlich bessere Schonung empfindlicher Oberflächen von flächigen Gütern zu gewährleisten.

Zur Lösung der gestellten Aufgabe ist die Erfindung durch die unabhängigen Ansprüche 1 und 16 gekennzeichnet

Mit der gegebenen technischen Lehre ergibt sich der wesentliche Vorteil, dass nun eine besonders schonende Behandlung von flächigem Gut möglich ist, denn es wird eine Relativbewegung zwischen den Unter- und Oberseiten der Gabeln und dem empfindlichen, flächigem Gut verhindert.

Eine derartige Relativbewegung sollte zwar auch beim Stand der Technik nach der DE 100 13 417 C2 vermieden werden, jedoch waren dort die Gurte oder Riemen nur passiv angetrieben, das heißt sie wurden aufgrund von Reibungskräften beim Aufsetzen der Gabeln auf die Oberfläche des flächigen Gutes mitgenommen. Dies reicht für bestimmte Anwendungszwecke (bei besonders empfindlichen Gut) nicht aus.

Daher sieht die Erfindung vor, dass mit dem Einfahren der Gabeln synchron mit der Vorschubbewegung dieser Gabeln nun der Antrieb der Gurte stattfindet.

In einer ersten bevorzugten Ausgestaltung ist es vorgesehen, dass der Vorschub des Einleggreifers genau synchron mit der Geschwindigkeit der Gurte auf den Gabeln stattfindet, um jegliche Relativbewegung zwischen der Oberseite und Unterseite der Gabeln und dem flächigen Gut zu vermeiden.

Wichtig bei der Erfindung ist, dass der Einleggreifer erfindungsgemäß mit einem Anschraubflansch an den Roboterarm eines dreidimensional gesteuerten Roboters angeschlossen wird und die Vorschubgeschwindigkeit dieses Roboterarms als Vorschubgeschwindigkeit für den Einleggreifer verwendet und diese Geschwindigkeit wird nun synchronisiert mit der Antriebsgeschwindigkeit der Gurte auf den Gabeln.

Es kann jeder beliebige Roboter verwendet werden, wie zum Beispiel ein Roboter, der sich im kartesischen System bewegt, jedoch auch Roboter, die im 6-Achsen-Betrieb arbeiten.

Die Verwendung eines 6-Achs-Roboters wird hierbei bevorzugt, weil eine noch verbesserte Schonung des empfindlichen Stapels erreicht wird. Beim so genannten Abstechen des Stapels, dass beim Hochkippen eines Teilstapels von einem Gesamtstapel nämlich dafür gesorgt wird, dass der gesamte Einleggreifer entlang einer Bogenkurve fährt, was im Prinzip nur mit 6-Achs-Robotern durchgeführt werden kann und hierdurch das hintere Ende des Teilstapels um einen Drehpunkt schwenkt und gleichmäßig belastet wird, was nur in Form einer Bogenform gehenden Abhebebewegung möglich ist.

Damit ergibt sich eine Art von Schuppenform an den vereinzelten Kartonblättern und es ist nun dadurch möglich, besonders schonend linear mit den Gabeln in den gebildeten Zwischenraum zwischen dem Einzelstapel und dem Gesamtstapel zu fahren.

Ein gleicher Vorteil ergibt sich im Übrigen auch beim Einlegen eines vereinzelten Teilstapels auf einen Gesamtstapel.

Der Einfachheit halber wird in der folgenden Erfindungsbeschreibung von einem Kartonstapel ausgegangen, worauf die Erfindung jedoch nicht beschränkt ist. Die Erfindung beansprucht die Vereinzelung und das Zusammenführen jeglichen flächigen Gutes, insbesondere auch Folienblätter, Papierblätter, Wellpappbögen, Kartonblätter, Kartonagen, Furnierfolien, Holzfurniere und dergleichen mehr.

Ein Verfahren zum Betrieb eines derartigen Einleggreifers besteht aus folgenden Verfahrensschritten:
1. Heranfahren mit dem Einleggreifer an die Stirnseite eines Produktstapels und Ausrichten einer Ausrichtplatte an dieser Stirnseite. Hierbei ist der Mitnehmerschlitten in seiner vordersten vorgeschobenen Position auf den Gabeln (Ausrichten).
2. Heranfahren eines Nagelkissens an die Stirnseite des Produktstapels, wobei der Einleggreifer im Winkel zur Horizontalen angehoben ist (Abstechen).
3. Anheben des Teilstapels im Winkel von dem verbleibenden Produktstapel an seiner vorderen Stirnseite.
4. Einfahren der Gabeln in den Zwischenraum zwischen dem Teilstapel und dem verbleibenden Produktstapel beim angehobenen Teilstapel.
5. Spannen des Teilstapels durch Betätigung eines Niederhalters bei eingefahrenen Einleggreifer.
6. Abheben des Teilstapels mit dem Einleggreifer.
7. Schräges zuführen des Teilstapels auf einen Ablegestapel in Bogenkurve.
8. Aufsetzen der hinteren - einlegegreiferfernen - Seite des Teilstapels auf den Ablegestapel.
9. Herausziehen der Gabeln aus dem Zwischenraum zwischen Teilstapel und Produktstapel bei ausgefahrener Ausrichtplatte und entferntem Niederhalter.
10. Absenken des vorderen Ende des angehobenen Teilstapels auf den lagernden Produktstapel.

Vorteil des erfindungsgemäßen Verfahrens ist, dass eigentlich der zu vereinzelnde Teilstapel in sehr einfacher Weise vom dem lagernden Produktstapel vereinzelt wird. Es genügt nämlich nur, die dem einleggreifernahe Stirnseite des Teilstapels schräg vom Produktstapel anzuheben, wobei die vom Einleggreifer entfernte Stirnseite des Teilstapels an einem Anschlag zu liegen kommt und eine etwa bogenförmige Abhebebewegung an diesem Anschlag ausführt.

Dadurch kommt es zu einer Relativbewegung zwischen den einzelnen Blättern, weil es sich um eine bogenförmige Abhebebewegung um einen festen, einlegegreiferfernen Drehpunkt handelt und dadurch besteht der Vorteil, dass die einzelnen Blätter geringfügig gegeneinander verschoben werden und hierbei eine Schuppenform einnehmen. Hierdurch werden Verklebeerscheinungen und sonstige Adhäsionen in dem Bereich der einzelnen Blätter im Bereich des Teilstapels verhindert, was zu einer Schonung der Blätter im Teilstapel beiträgt.

Weiterer Vorteil ist, dass mit einem herkömmlichen Roboterarm gearbeitet werden kann und es keiner weiteren Antriebsmechanismen für den Einlegegreifer bedarf.

Die Steuerung eines Roboterarms ist relativ überschaubar und Roboterarme werden vielfältig in der Maschinenindustrie eingesetzt und ein wesentliches Merkmal der Erfindung ist, dass der Einlegegreifer an einem herkömmlichen Roboterarm angeschraubt wird und somit jegliche Bewegung des Roboterarms ausführt.

Es ergibt sich damit eine sehr einfache Steuerung, weil die Steuerungen derartiger Roboterarme standardisiert sind und es eine eigene Steuerung für den Einlegegreifer nicht mehr bedarf.

Außerdem ist der Platzbedarf zu den klassischen "Pre-feeder" wesentlich geringer, weil diese eine eigene Antriebseinheit benötigen, was bei der Erfindung entfällt.

Ein weiterer Vorteil des erfindungsgemäßen Einleggreifers ist, dass die Verarbeitungsmaschine, welche die Kartonagen von dem Stapel entnimmt, nach wie vor manuell beschickt werden kann, weil der Einleggreifer ohne weiteres außer Eingriff mit dem Teilstapel und dem Produktstapel gebracht werden kann. Es kommt nicht zu einer dauerhaften Ablagerung des Produktstapels auf dem Einlegegreifer, wie es bei sogenannten Pre-feeder üblich ist.

Der Erfindungsgegenstand der vorliegenden Erfindung ergibt sich aus dem Gegenstand der einzelnen Patentansprüche.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: perspektivische Ansicht eines Einleggreifers in einer ersten Ausführungsform;
- Figur 2:: perspektivische Ansicht einer zweiten Ausführungsform eines Einleggreifers;
- Figur 3:: der Vorgang des Ausrichtens des Einleggreifers am Produktstapel;
- Figur 4:: der Vorgang des Abstechens des Teilstapels vom Produktstapel;
- Figur 5:: der Vorgang des Anhebens des Teilstapels vom Produktstapel;
- Figur 6:: der Vorgang des Einfahrens der Gabeln;
- Figur 7:: der Vorgang des weiteren Einfahrens der Gabeln;
- Figur 8:: der Vorgang des Spannens des Teilstapels;
- Figur 9:: der Vorgang des Vereinzelung des Teilstapels;
- Figur 10:: der Vorgang der Zuführung des Teilstapels auf einen Ablegestapel;
- Figur 11:: der Vorgang des Ablegens des Teilstapels auf einen Ablegestapel;
- Figur 12:: der Vorgang des Ausfahrens der Gabeln aus dem Teilstapel;
- Figur 13:: der Vorgang des Wegfahrens vom Teilstapel.

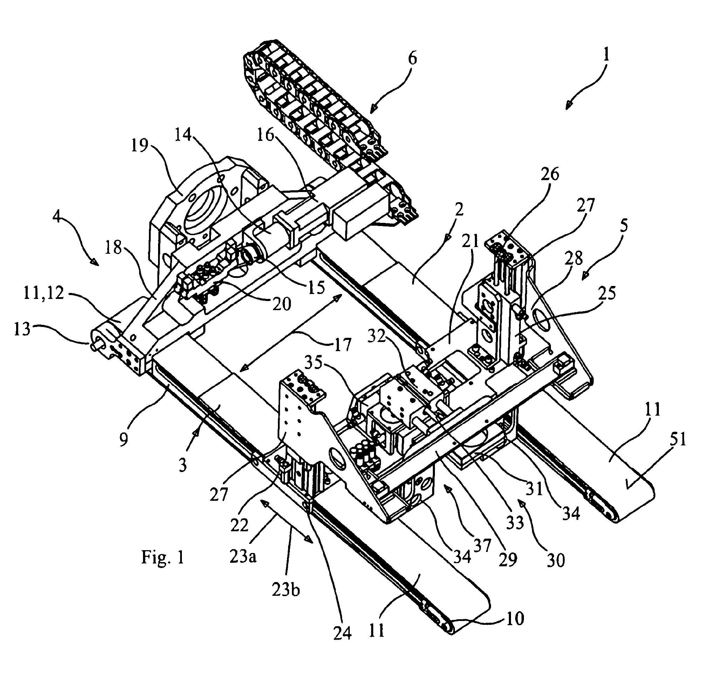

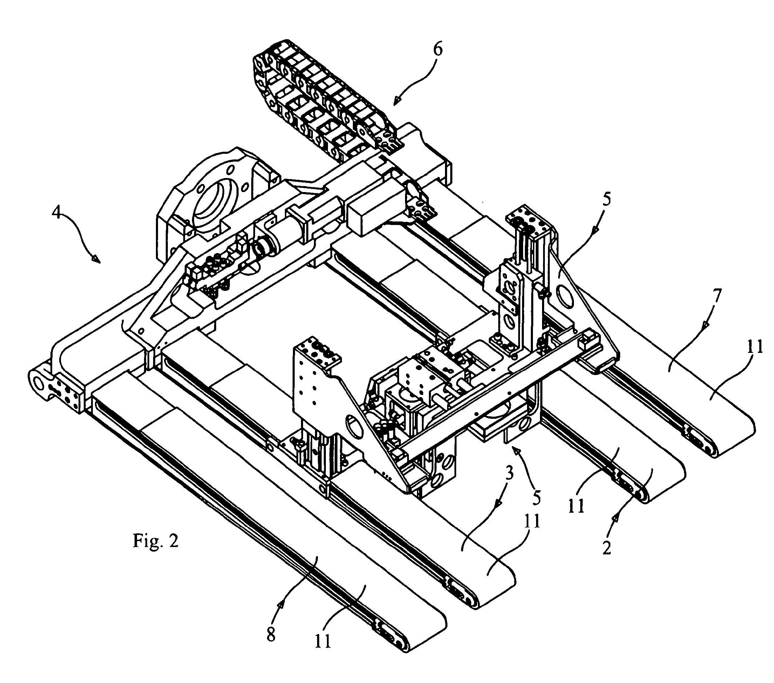

In Figur 1 und 2 ist ein Einleggreifer 1 in zwei verschiednen Ausführungsformen dargestellt.

Der Einleggreifer besteht im wesentlichen aus einem hinteren Querträger 4, an dem ein Anschraubflansch 19 zum Koppeln des Einleggreifers 1 an dem vorderen freien Ende eines Roboterarmes befestigt ist.

Im Bereich des Querträgers 4 ist eine in Richtung der Längsachse des Querträgers drehbar gelagerte und motorisch angetriebene Antriebswelle 13 vorhanden, welche den Antrieb für die Gurte 11 auf den Gabeln 2, 3 übernimmt.

Am Querträger 4 sind deshalb die hinteren Enden der Gabeln 2, 3 befestigt, wobei der Abstand 17 zwischen den Gabeln 2, 3 veränderbar einstellbar ist.

Auf dem Querträger 4 sind noch eine Reihe von Ventileinrichtungen 20 angeordnet und im Übrigen ein Getriebe 14, dessen Abtriebswelle mit einem Antriebsriemen 15 verbunden ist, welcher auf die Antriebswelle 13 des Querträgers 4 wirkt.

Das Getriebe 14 wird von einem Antriebsmotor 16 angetrieben.

Die gesamte Energieversorgung für den Einleggreifer 1 erfolgt über eine gelenkige Energiezuführung 6. Wichtig ist, dass der Querträger 4 nun in Richtung seiner Längserstreckung modular erweiterbar ist, in dem die gemäß Figur 2 weitere Gabeln 7, 8 auf den Querträger 4 aufsteckbar sind.

In diesem Fall sind in den Gabeln 7, 8 die Antriebswellenteilstücke vorhanden, welche Teilstücke über zugeordnete Klauenkupplungen mit dem Stummel der jeweiligen Antriebswelle 13 im Querträger 4 koppelbar sind. Auf diese Weise ist es einfach möglich, neben zwei Gabeln 2, 3 deren vier anzuordnen, wie dies in Figur 2 dargestellt ist.

Wichtig ist, dass der Querträger 4 immer auch den Antrieb über die Antriebswelle 13 für den Antrieb der verschiedenen Gurte 11 zur Verfügung stellt.

Die Gabeln 2, 3; 7, 8 sind genau gleich ausgebildet. Es genügt daher für die weitere Beschreibung, lediglich den Aufbau einer einzelnen Gabel 2 oder 3 zu erläutern, weil alle Gabeln gleich sind.

Ebenso ist der gesamte Einlegegreifer in Richtung zu seiner Längsmittenachse spiegelsymmetrisch ausgebildet, so dass es auch ausreicht, lediglich die eine Hälfte des Einleggreifers zu beschreiben, weil die gegenüberliegende Hälfte genau gleich ausgebildet ist.

Bezüglich des Aufbaus einer Gabel wird auf die Figur 1 verwiesen.

Die Gabel besteht hierbei aus einem Längsträger 9, der in seinem hinteren Bereich mit dem Querträger 4 fest verbunden ist.

Der Längsträger 9 bildet an seinem vorderen freien Ende eine Umlenkeinrichtung 10 für das Herumführen des Gurtes 11 und ebenso an seinem hinteren Ende eine Umlenkrolle 12, über die der Gurt 11 ebenfalls umgelenkt wird.

Der jeweilige Gurt 11 trägt an seiner Oberseite eine Beschichtung 51 aus einem möglichst reibungserhöhenden Material. Ein solches reibungserhöhendes Material kann beispielsweise ein elastomerer Schaumstoff sein, ein Moosgummi oder dergleichen mehr, um ein schonendes und beschädigungsfreies Aufsetzen auf die Oberfläche eines Kartonblattes zu ermöglichen.

Der Querträger 4 ist im Übrigen mit einer Traverse 18 verbunden, an deren mittigen Teil der genannte Anschraubflansch 19 befestigt ist, an dem der Roboterarm angreift. Ein solcher Roboterarm ist in vielfältigen Ausführungsformen zum Beispiel von der Firma Kuka bekannt geworden, so dass sich ein Eingehen auf die Funktion eines derartigen Roboterarms erübrigt.

Wichtig ist nun, dass jeder Gurt 11 jeder Gabel 2, 3; 7, 8 fest mit einem Ende eines Mitnehmerschlittens 5 verbunden ist, der somit fest mit jeweils einem Gurt 11 gekoppelt ist.

Die Kopplung erfolgt hierbei dadurch, dass der Mitnehmerschlitten eine Anschraubplatte 22 aufweist, mit der er auf der Oberseite des Gurtes 11 festgeschraubt ist, wobei auf der Unterseite des Gurtes 11 eine Gegenplatte angeordnet ist.

Zur Führung des gesamten Mitnehmerschlittens 5 in den Pfeilrichtungen 23a, 23b auf den Gabeln 2, 3; 7, 8 ist im Übrigen eine Längsführung 24 vorgesehen, die aus Rollenelementen besteht, die in eine an den Stirnflächen des Längsträgers 9 eingearbeitete Längsnut eingreifen.

Der Mitnehmerschlitten 5 weist einen Querträger 21 auf, der mit den vorher genannten Anschraubplatten 22 verbunden ist, und am Querträger sind hierbei Zylindergehäuse 25 für jeweils einen Vertikalschlitten 27 angeordnet.

Der Vertikalschlitten 27 besteht somit aus seitlichen Traversen 28 die in ihrem vorderen Bereich durch eine Quertraverse 29 miteinander verbunden sind.

An den Vertikalschlitten 27 greifen die freien oberen Enden von Kolbenstangen 26 einer Kolbenzylindereinheit 25 an und es sind gleichfalls noch Führungsstangen vorhanden, um eine gute Vertikalführung zu erreichen.

Auf diese Weise ist es möglich, den gesamten vorderen Bereich mit der Quertraverse 29 und einem fest angeordneten Niederhalter-Druckstück 31 in vertikaler Richtung zu bewegen.

Die Darstellung in Figur 1 zeigt ferner, dass eine Ausrichtplatte 34 vorhanden ist, die mit einer Kolbenstange 33 einer Kolbenzylinderanordnung 32 verbunden ist. Es handelt sich hierbei um einen Ausrichtzylinder 32, der später zum Ausrichten eines Kartonstapels verwendet wird.

Im hinteren Bereich des Querträgers 21 ist im Übrigen noch ein Abstechzylinder 35 vorhanden, der mit einer vorderen Kolbenstange auf ein Nagelkissen 38 wirkt, welches anhand der späteren Zeichnungsbeispiele noch näher erläutert wird.

Insgesamt wird also mit der Quertraverse 29 und dem Niederhalterdruckstück 31 ein Niederhalter 30 verwirklicht, während mit der Kolbenzylindereinheit 35 eine Abstecheinrichtung verwirklicht wird.

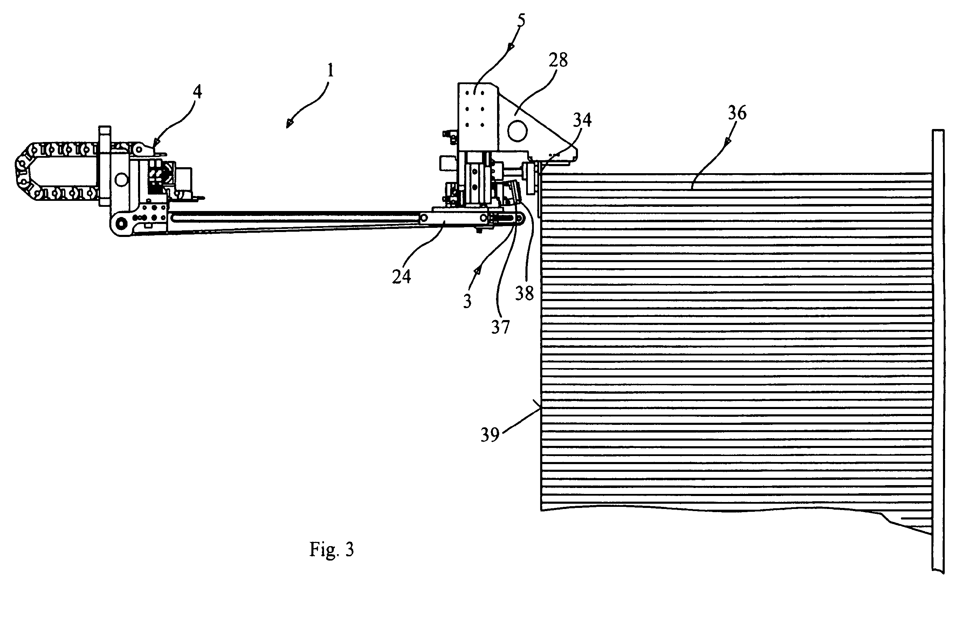

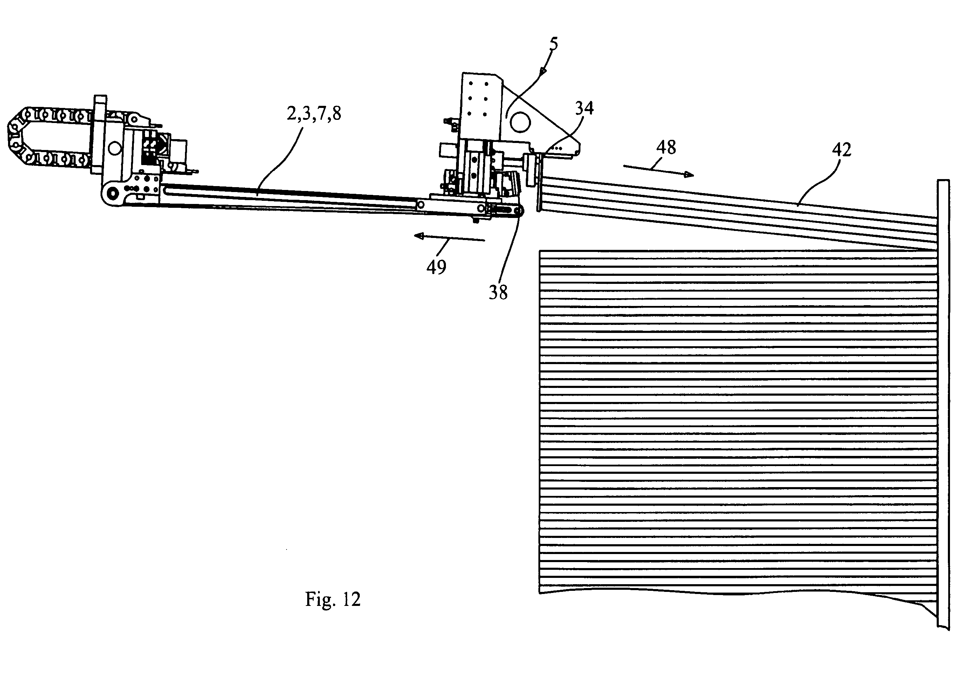

Anhand der Figuren 3 bis 13 wird nun der verfahrensmäßige Betrieb eines Einlegegreifers nach der Erfindung näher erläutert.

Es soll von einem Produktstapel 36 ein Teilstapel 42 entnommen werden und auf ein Ablegestapel 45 möglichst schonend und beschädigungsfrei aufgelegt werden.

Zu diesem Zweck zeigt die Figur 3, dass der Einleggreifer 1 in horizontaler Stellung an die Stirnseite des Produktstapels 36 herangefahren ist, wobei der Mitnehmerschlitten 5 in seiner vordersten Position auf den Gabeln 2, 3; 7, 8 verfahren ist.

In dieser Stellung ist gleichzeitig auch Ausrichtplatte 34 nach vorne ausgefahren und legt sich an die Stirnseite 39 des Produktstapels 36 an.

Dadurch werden alle Kartonagen im späteren Teilstapel 42 ausgerichtet.

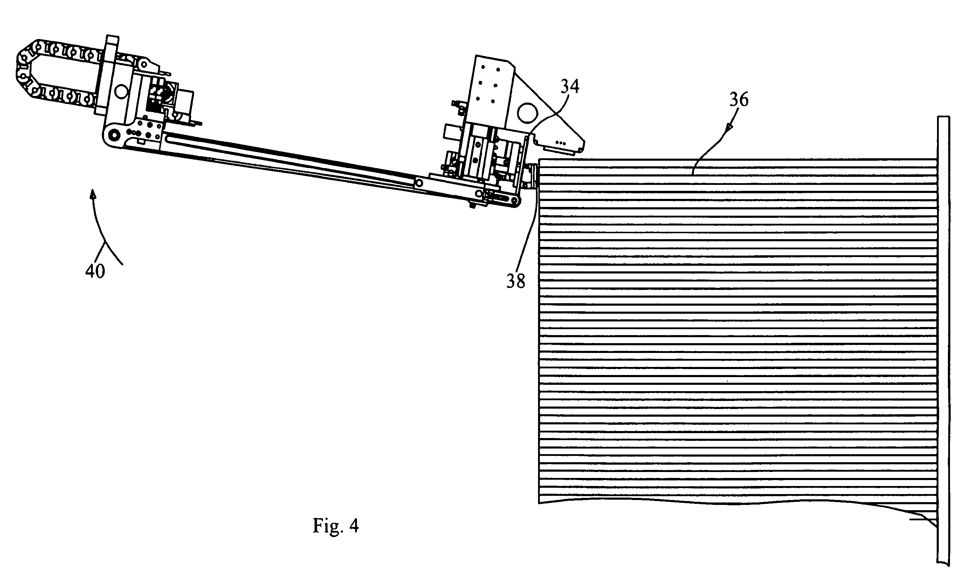

Gemäß Figur 4 erfolgt nun eine bogenförmige Kippbewegung des Einlegegreifers in Pfeilrichtung 40 mit einem Drehpunkt um ein schräg angeordnetes Nagelkissen 38, welches somit in genauer Gegenüberstellung und planparallel auf die Stirnseite des Produktstapels 36 aufgesetzt wird. Das Nagelkissen ist Teil einer vorher beschriebenen Trenneinrichtung 37.

Durch die bogenförmige Anhebebewegung des Nagelkissens 38 erfolgt somit ein planparalleles Eindringen der einzelnen Nägel im Nagelkissen 38 in die Stirnseiten der zu vereinzelnden Kartonagen, ohne dass es zu einem Aufreisen oder einer unerwünschten Relativbewegung zwischen den einzelnen Kartonagen und Nägeln im Nagelkissen 38 kommt.

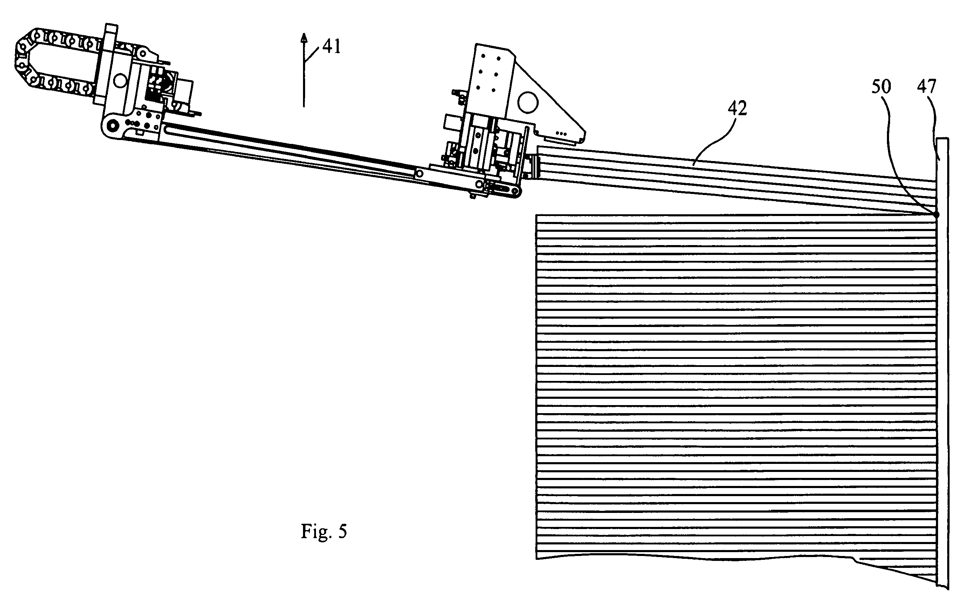

In Figur 5 erfolgt nun ebenfalls eine bogenförmige Anhebebewegung des gesamten Einlegegreifers 1 in Pfeilrichtung 41, wobei ein Drehpunkt 50 den zu vereinzelnden Teilstapel 42 an einem hinteren Anschlag 47 anlegt.

Durch diese bogenförmige Drehbewegung des Einleggreifers in Pfeilrichtung 41 schuppen sich somit die einzelnen Kartonagenblätter im Teilstapel 42 gegeneinander auf und heben sich schonend von dem hinteren Anschlag 47 ab.

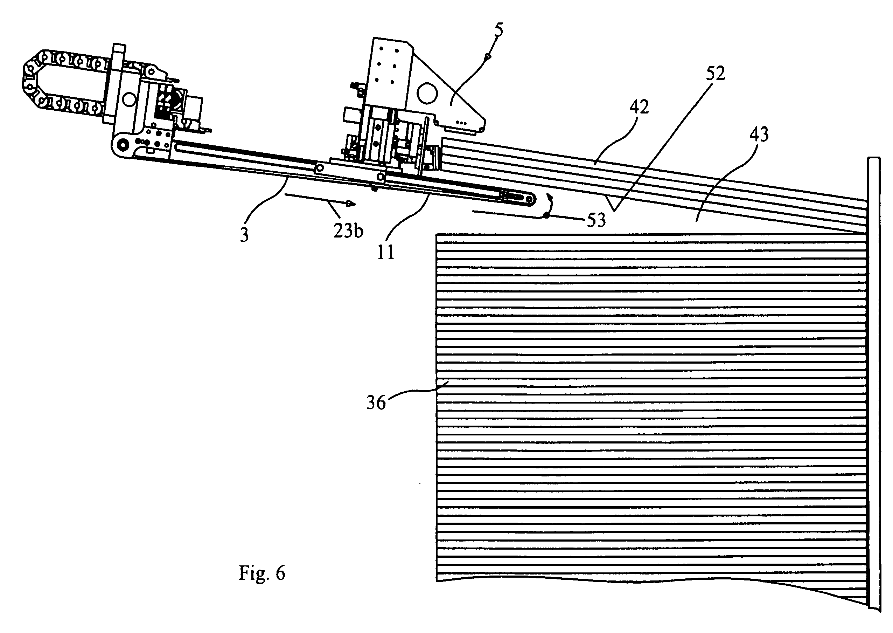

In Figur 6 erfolgt nun eine synchrone Einfahrbewegung der Gabeln 2, 3; 7, 8 in Pfeilrichtung 23b.

Hierbei wird der gesamte Einleggreifer 1 durch entsprechende Ansteuerung des Roboterarmes in Pfeilrichtung 23b in den Zwischenraum 43 zwischen dem Teilstapel 42 und dem Produktstapel eingefahren, wobei wesentlich ist, dass es nun zu keiner Relativbewegung zwischen den einfahrenden Gabeln 2, 3; 7, 8 und der Oberfläche des untersten Kartonblattes im Teilstapel 42 kommt.

Zu diesem Zweck sieht die Erfindung vor, dass die Vorschubbewegung des Einleggreifers 1 in Pfeilrichtung 23b genau synchronisiert wird mit der Vorschubbewegung der Gurte 11 in Pfeilrichtung 53 auf den Gabeln 2, 3; 7, 8.

Damit wird jegliche Relatiwerschiebung zwischen der Oberfläche der Gurte 11 und der Oberfläche 52 des untersten Kartonblattes vermieden und ein besonders schonendes und beschädigungsfreies Einfahren gewährleistet.

Hierbei bleibt selbstverständlich jegliche Relatiwerschiebung zwischen der Oberfläche der Gurte 11 und der Oberfläche 52 des untersten Kartonblattes vermieden und ein besonders schonendes und beschädigungsfreies Einfahren gewährleistet.

Nachdem der Mitnehmerschlitten 5 auf den Gurten 11 selbst befestigt ist, wird somit eine automatische Synchronisierung ermöglicht. Es kommt zu keinerlei Relativverschiebung zwischen der Lage des Mitnehmerschlittens und den Gurten 11, weil der Mitnehmerschlitten 5 selbst auf den Gurten 11 befestigt ist.

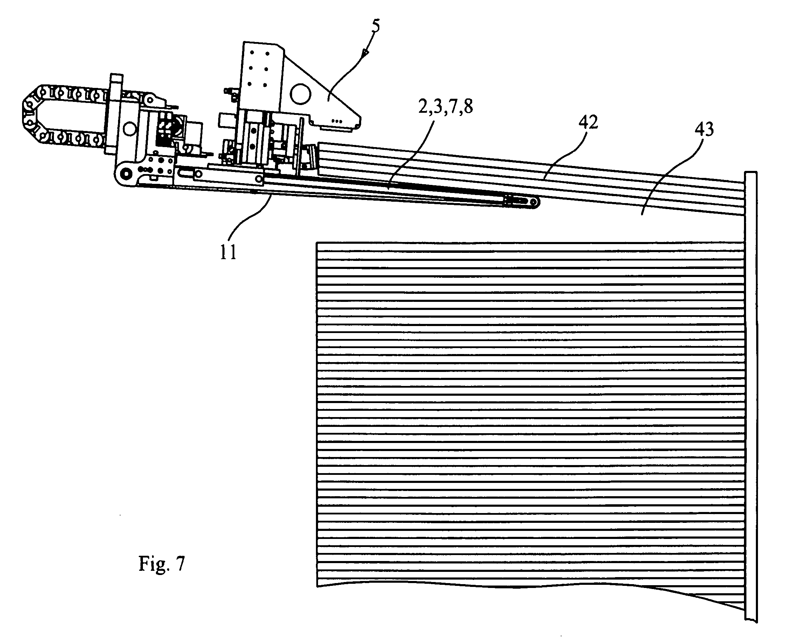

Die Figur 7 zeigt die voll eingefahrene Stellung des Einleggreifers 1 in den Zwischenraum 43, so dass gleichzeitig erkennbar ist, dass sich der Mitnehmerschlitten 5 nun im hinteren Bereich des Einleggreifers 1 befindet und sich die Gabeln 2, 3 weitestmöglichst in den Zwischenraum 43 eingeschoben sind.

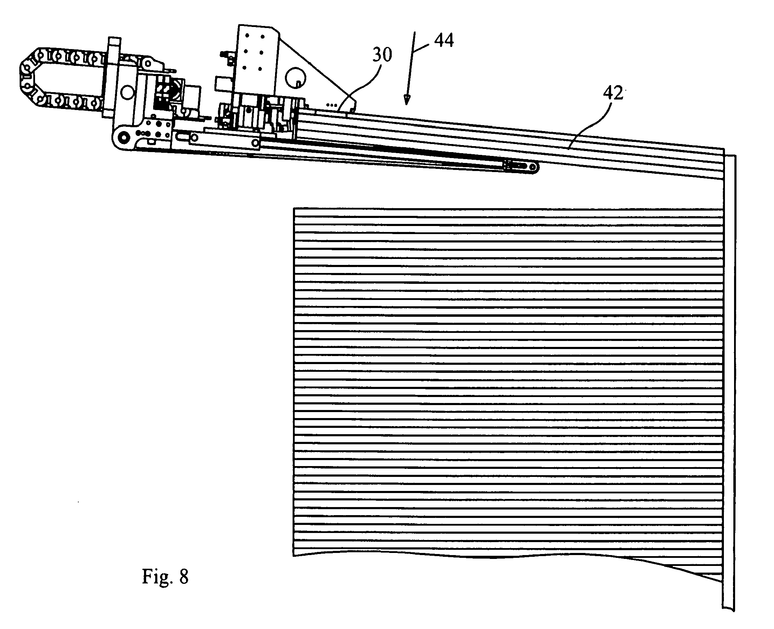

Die Figur 8 zeigt nun ein Spannen des Teilstapels 42, in dem der Niederhalter 30 beaufschlagt wird und das vorher genannte Niederhalter-Druckstück 31 auf die Oberseite des Teilstapels 42 schonend aufgesetzt wird, um diesen festzuhalten. Es erfolgt hierbei eine Spannbewegung in Pfeilrichtung 44 nach unten.

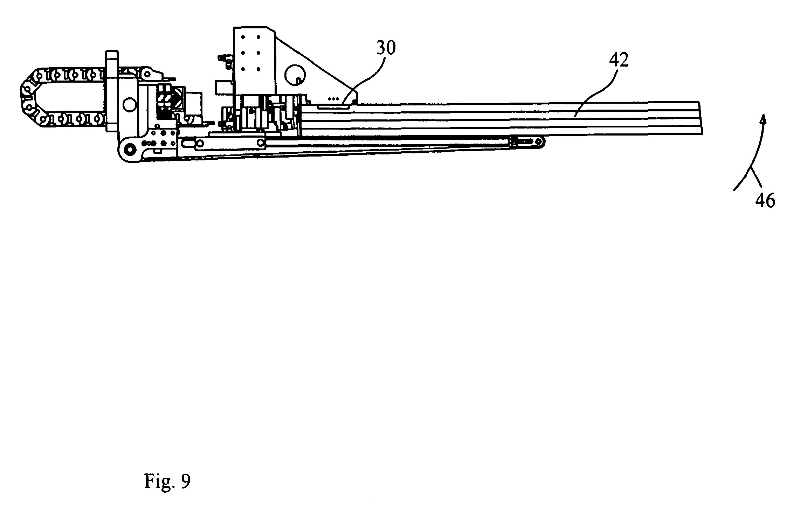

Figur 9 zeigt, dass nun der Niederhalter 30 beaufschlagt wird und das vorher genannte Niederhalter-Druckstück 31 auf die Oberseite des Teilstapels 42 schonend aufgesetzt wird, um diesen festzuhalten. Es erfolgt hierbei eine Spannbewegung in Pfeilrichtung 44 nach unten.

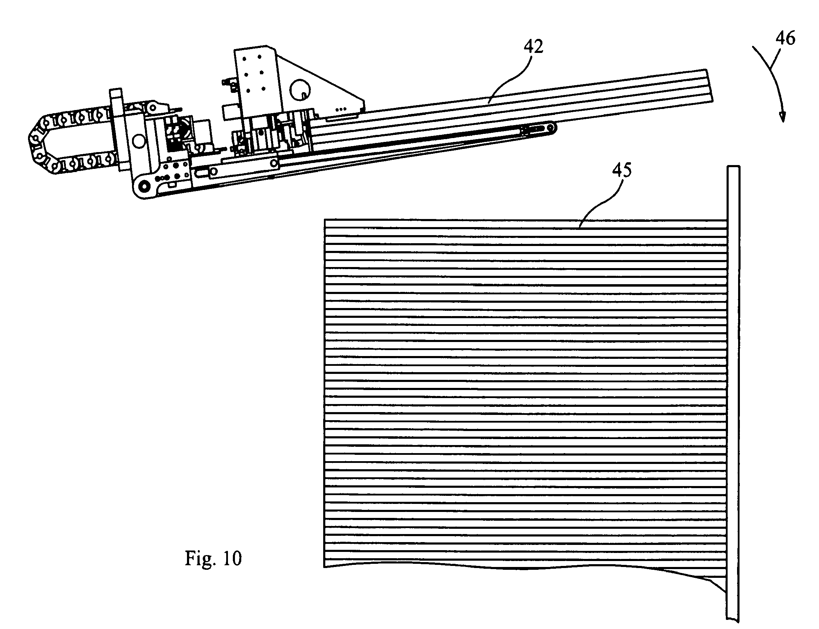

Die Figur 10 zeigt, dass nun in Gegenrichtung zur eingezeichneten Pfeilrichtung 46, nämlich in Pfeilrichtung 46' nun wieder eine schräg gerichtete Aufsetzbewegung des Teilstapels auf einen neuen Ablegestapel 45 stattfindet.

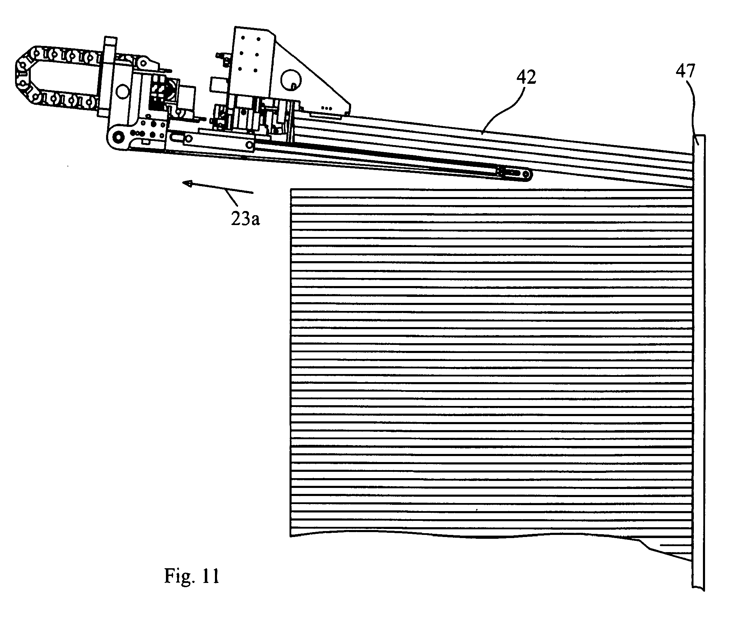

Somit wird gemäß Figur 11 der Teilstapel 42 zunächst an seinem dem einleggreifer-fernen Ende an dem Anschlag 47 schräg angelegt, wobei der Teilstapel 42 im Niederhalter 30 geklemmt bleibt.

Wenn die Stirnseite des Teilstapels 42 am Anschlag 47 anliegt wird zunächst der Niederhalter 30 entspannt und der Teilstapel freigegeben. Sonach wird bei an der Stirnseite angelegte Ausrichtplatte 34 der gesamte Einleggreifer 1 mit den Gabeln 2, 3; 7, 8 in Pfeilrichtung 48 herausgefahren, wobei wiederum wesentlich ist, dass das Nagelkissen 38 in Pfeilrichtung 49 zurückgefahren wird, während die Ausrichtplatte 34 in Pfeilrichtung 48 gegen die Stirnseite des Teilstapels 42 angelegt wird.

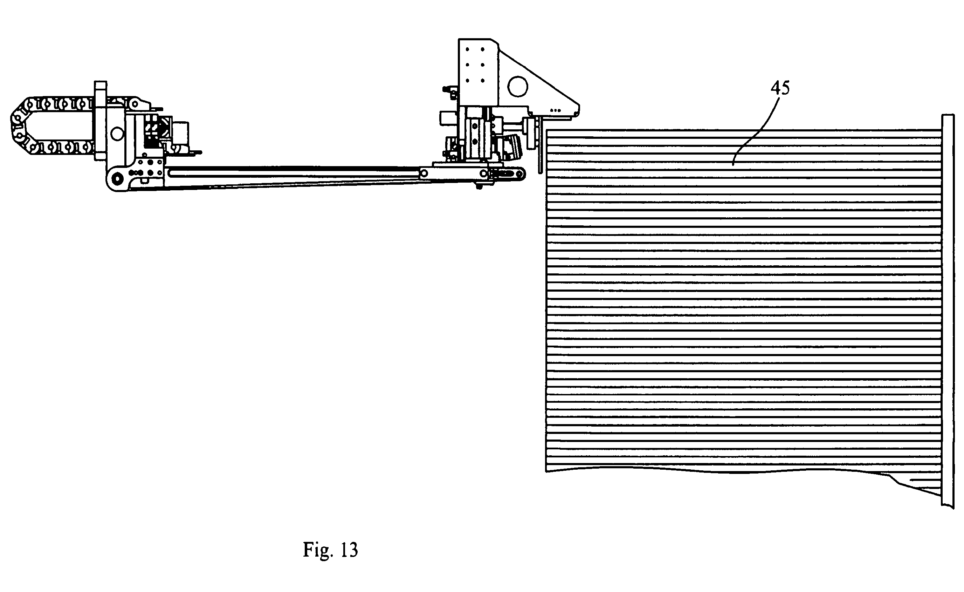

Die Figur 13 zeigt nun die Endstellung des Einleggreifers, wo erkennbar ist, dass die Ausrichtplatte 34 von der Stirnseite des Ablegestapels 45 entfernt ist und gleichzeitig auch der Nadelgreifer 38 außer Eingriff gebracht wurde.

Es kann nun ein weiterer Einlegezyklus für den Einlegegreifer 1 stattfinden.

Wichtig ist, dass der Einleggreifer 1 nun einen vollkommen ausgerichteten und sauber zusammengehaltenen Ablegestapel 45 definiert, auf dem die einzelnen Kartonblätter in besonders schonender Weise abgelegt sind. Es ist beispielsweise dann auch möglich, die Kartonblätter von dem Ablegestapel 45 mit der Hand oder mit einer anderen Maschine zu entnehmen um sie einer Weiterverarbeitung zuzuführen.

Vorteil der gesamten Anordnung ist, dass wegen der Kopplung des Mitnehmerschlittens 5 mit den Gurten 11 kein Abrieb zwischen den Gurten und den Kartonblättern stattfinden kann.

Mit dem Vertikalantrieb des Niederhalters 30 über die Kolbenzylindereinheiten 25, 26 ergibt sich der Vorteil, dass unterschiedlich hohe Teilstapel abgehoben und auf eine Ablegestapel 45 aufgelegt werden können.

Die Verwendung einer Trenneinrichtung 37 mit einem Nagelkissen 38 hat den Vorteil, dass man schräg an die Stirnseite des zu vereinzelnden Teilstapels 42 heranfährt und synchron mit allen Nägeln in die Stirnseiten der zu vereinzelnden Kartonblätter einfährt (oder zumindestens in die unteren Kartonblätter, während die oberen unbeeinflusst werden) und hindurch ein schonendes Eindringen der Nägel ohne Beschädigung der Stirnseiten der einzelnen Kartonblätter stattfindet.

Die Anordnung einer Ausricht-Einrichtung bestehend aus den Ausrichtzylinder 32 und der Ausrichtplatte 34 hat den weiteren Vorteil, dass die zu vereinzelnden Kartonblätter genau zusammengeschoben werden und genau zentriert auf dem Teilstapel 42 gehalten werden. Es wird noch erwähnt, dass der Niederhalter 30 auch noch den Vorteil hat, dass bei schnellen Bewegungen des geklemmten Teilstapels 42 beispielsweise gemäß Figur 9, 10 und 11 ein unbeabsichtigtes Verschieben der Kartonblätter im Teilstapel 42 vermieden.

Durch die Verschiebung des Mitnehmerschlittens 5 auf den Längsträger 9 zusammen mit den Gurten 11 besteht der weitere Vorteil, dass die effektiv sich in Eingriff mit dem Teilstapel 42 befindliche Länge der Gabeln 2, 3; 7, 8 frei einstellbar ist. Bei geringeren Formattiefen des Produktstapels 36 oder des Ablegestapels 45 wird somit der Mitnehmerschlitten 5 nicht bis ganz in seinen hinteren Bereich in die nähe des Querträgers 4 verfahren. Es ergibt sich damit eine kürzere, effektive und in Eingriff mit der stapelbefindlichen Länge der Gabeln 2, 3; 7, 8.

### Zeichnungslegende

- 1: Einleggreifer
- 2: Gabel
- 3: Gabel
- 4: Querträger
- 5: Mitnehmerschlitten
- 6: Energiezuführung
- 7: Gabel
- 8: Gabel
- 9: Längsträger
- 10: Umlenkeinrichtung
- 11: Gurt
- 12: Umlenkrolle
- 13: Antriebswelle
- 14: Getriebe
- 15: Antriebsriemen
- 16: Antriebsmotor
- 17: Abstand
- 18: Traverse
- 19: Anschraubflansch
- 20: Ventileinrichtung
- 21: Querträger
- 22: Anschraubplatte
- 23: Pfeilrichtung
- 24: Führung
- 25: Zylindergehäuse
- 26: Kolbenstange
- 27: Vertikalschlitten
- 28: Traverse
- 29: Quertraverse
- 30: Niederhalter
- 31: Niderhalter-Druckstück
- 32: Ausrichtzylinder
- 33: Kolbenstange
- 34: Ausrichtplatte
- 35: Absteckzylinder
- 36: Produktstapel
- 37: Trenneinrichtung
- 38: Nagelkissen
- 39: Stirnseite
- 40: Pfeilrichtung
- 41: Pfeilrichtung
- 42: Teilstapel
- 43: Zwischenraum
- 44: Pfeilrichtung
- 45: Ablegestapel
- 46: Pfeilrichtung 46'
- 47: Anschlag
- 48: Pfeilrichtung
- 49: Pfeilrichtung
- 50: Drehpunkt
- 51: Beschichtung
- 52: Oberfläche
- 53: Pfeilrichtung

## Patentansprüche

1. Vorrichtung zum Einlegen von flächigem Gut insbesondere von Kartonagen oder ähnlichem in Verarbeitungsmaschinen, wobei die Vorrichtung als Einleggreifer (1) ausgebildet ist und im Wesentlichen ein Trägerteil mit zwei parallel angeordneten Gabeln aufweist, welche auf der Ober- und Unterseite mit in Längsrichtung der Gabeln sich erstreckenden Gurten oder Riemen (11) ausgebildet sind, wobei die Gurte oder Riemen mit jeweils einem Ende eines querverlaufenden Mitnehmer verbunden sind, und dass der Einleggreifer (1) an einen Roboterarm angeschlossen ist, **dadurch gekennzeichnet, dass** der Mitnehmer als Mitnehmerschlitten (5) ausgebildet ist und fest mit den Gurten oder Riemen (11) verbunden ist und dass die Vorschubgeschwindigkeit des Greifers (1) mit der Antriebsgeschwindigkeit der Gurte oder Riemen (11) auf den Gabeln (2, 3; 7, 8) synchronisiert ist.

2. Vorrichtung nach Anspruch 1, **dadurch gekennzeichnet, dass** an dem Einleggreifer (1) mindestens eine Trenneinrichtung (37) zum Abtrennen eines Teilstapels (42) von einem Produktstapel (36) angeordnet ist.

3. Vorrichtung nach Anspruch 1 und 2, **dadurch gekennzeichnet, dass** das Trägerteil einen Querträger (4) mit einer angeordneten Traverse (18) aufweist, der eine drehbar gelagerte und motorisch angetriebene Antriebswelle (13) vorsieht, welche den Antrieb für die Gurte (11) auf den Gabeln (2, 3) übernimmt und mittels einem Anschraubflansch (19) an dem vorderen freien Ende eines Roboterarms befestigt ist.

4. Vorrichtung nach Anspruch 3, **dadurch gekennzeichnet, dass** auf die Antriebswelle (13) weitere Gabeln (7, 8) anflanschbar sind, welche die Nutzbreite des Einleggreifers (1) erweitern.

5. Vorrichtung, nach den Ansprüchen 3 oder 4, **dadurch gekennzeichnet, dass** die Gabeln (2, 3; 7, 8) im hinteren Bereich mit dem Querträger (4) fest verbunden sind und einen Längsträger (9) aufweisen, welcher an seinem vorderen freien Ende eine Umlenkeinrichtung (10) für das Herumführen des Gurtes (11) und an seinem hinteren Ende eine Umlenkrolle (12), über welche der Gurt (11) umgelenkt wird.

6. Vorrichtung nach Anspruch 5, **dadurch gekennzeichnet, dass** der Mitnehmerschlitten (5) eine Anschraubplatte (22) aufweist, mit der er auf der Oberseite des Gurtes (11) festgeschraubt ist, wobei auf der Unterseite des Gurtes (11) eine Gegenplatte angeordnet ist, wobei auf den Gabeln (2, 3; 7, 8) eine Längsführung (24) ausgebildet ist, welche aus Rollenelementen besteht, die in eine an den Stirnflächen des Längsträgers (9) eingearbeitete Längsnut eingreifen.

7. Vorrichtung nach Anspruch 6, **dadurch gekennzeichnet, dass** der Mitnehmerschlitten (5) einen Querträger (21) aufweist, welcher mit den Anschraubplatten (22) verbunden ist und jede Querseite ein Zylindergehäuse (25) aufweist, welches mit jeweils einem Vertikalschlitten (27) verbunden ist, welcher im vorderen Bereich eine Quertraverse (29) aufweist.

8. Vorrichtung nach Anspruch 7, **dadurch gekennzeichnet, dass** am Vertikalschlitten (27) die freien oberen Enden von Kolbenstangen (26) einer Kolbenzylindereinheit (25) mit vorhanden Führungsstangen angreifen, welche eine verbesserte Vertikalführung der Traverse (27) ausbilden.

9. Vorrichtung nach den Ansprüchen 7 oder 8, **dadurch gekennzeichnet, dass** die Quertraverse (29) ein fest angeordnetes Niederhalter-Druckstück (31) und einen Ausrichtzylinder (32) zum Ausrichten eines Kartonstapels aufweist, welcher mit einer Ausrichtplatte (34) mittels einer Kolbenstange (33) verbunden ist, wobei die Quertraverse (29) und das Niederhalterdruckstück (31) einen Niederhalter (30) ausbilden und ein im hinteren Bereich des Quertägers (29) angeordneter Abstechzylinder (35), welcher mit einer vorderen Kolbenstange auf ein Nagelkissen (38) wirkt eine Abstecheinrichtung ausbilden.

10. Vorrichtung nach den Ansprüchen 1 bis 9, **dadurch gekennzeichnet, dass** die Trenneinrichtung (37) eine besonders schonende Behandlung von flächigem Gut ausbildet, wobei eine Relativbewegung zwischen Ober- und Unterseite der Gabeln (2, 3; 7, 8) und dem flächigem Gut verhindert ist.

11. Vorrichtung nach den Ansprüchen 1 bis 10, **dadurch gekennzeichnet, dass** die Gabeln (2, 3; 7, 8) synchron mit ihrer Vorschubbewegung einen Antrieb der Gurte oder Riemen (11) aufweist.

12. Vorrichtung nach den Ansprüchen 1 bis 11, **dadurch gekennzeichnet, dass** der Vorschub des Einleggreifers (1) synchron mit der Geschwindigkeit der Gurte oder Riemen (11) ausgebildet ist.

13. orrichtung nach Anspruch 2, **dadurch gekennzeichnet, dass** der Roboter einen Teil vom Gesamtstapel des Kartonagenstapels hoch kippt, wobei der Einleggreifer (1) entlang einer Bogenkurve fährt und das hintere Ende des Teilstapels (42) um einen Drehpunkt schwenkt, wodurch eine gleichmäßige Belästung beim Aufnehmen als auch beim Einlegen eines Teilstapels (42) vom Produktstapel (36) der Kartonagen ausgebildet ist.

14. Vorrichtung nach den Ansprüchen 2 oder 13, **dadurch gekennzeichnet, dass** der Einleggreifer (1) an einem herkömmlichen Roboterarm anschraubbar ist; keine zusätzliche Antriebseinheit aufweist und außer Eingriff mit dem Teilstapel (42) und dem Produktstapel (36) bringbar ist.

15. Verfahren zum Betrieb einer Vorrichtung, welche flächiges Gut, insbesondere Kartonagen oder ähnliches in Verarbeitungsmaschinen einlegt, wobei die an einem Roboterarm angeschlossene und als Einleggreifer (1) ausgebildete Vorrichtung im Wesentlichen ein Trägerteil mit zwei parallel angeordneten Gabeln (2, 3; 7, 8) aufweist, welche auf der Ober- und Unterseite in Längsrichtung der Gabel sich erstreckende Gurte oder Riemen vorsehen, die mit dem jeweils einen Ende eines querverlaufenden Mitnehmers verbunden sind, **dadurch gekennzeichnet, dass** der als Mitnehmerschlitten (5) ausgebildete Mitnehmer fest mit den Gurten oder Riemen (11) verbunden wird und die Vorschubgeschwindigkeit des Greifers (1) mit der Antriebsgeschwindigkeit der Gurte oder Riemen (11) auf den Gabeln (2, 3; 7, 8) synchronisiert wird.

16. Verfahren nach Anspruch 15, **dadurch gekennzeichnet, dass** das Verfahren nachfolgende Verfahrenschritte aufweist:
• Heranfahren mit dem Einleggreifer (1) an die Stirnseite eines Produktstapels und Ausrichten einer Ausrichtplatte (34) an dieser Stirnseite. Hierbei ist der Mitnehmerschlitten (5) in seiner vordersten vorgeschobenen Position auf den Gabeln (2, 3; 7, 8) (Ausrichten);
• Heranfahren eines Nagelkissens (38) an die Stirnseite des Produktstapels (36), wobei der Einleggreifer (1) im Winkel zur Horizontalen angehoben ist (Abstechen);
• Anheben des Teilstapels (42) im Winkel von dem verbleibenden Produktstapel (36) an seiner vorderen Stirnseite;
• Einfahren der Gabeln (2, 3; 7, 8) in den Zwischenraum zwischen dem Teilstapel (42) und dem verbleibenden Produktstapel (36) beim angehobenen Teilstapel (42);
• Spannen des Teilstapels (42) durch Betätigung eines Niederhalters (30) bei eingefahrenen Einleggreifer (1);
• Abheben des Teilstapels (42) mit dem Einleggreifer (1);
• Schräges zuführen des Teilstapels (42) auf einen Ablegestapel (45) in Bogenkurve;
• Aufsetzen der hinteren - einlegegreiferfernen - Seite des Teilstapels (42) auf den Ablegestapel (45);
• Herausziehen der Gabeln (2, 3; 7, 8) aus dem Zwischenraum zwischen Teilstapel (42) und Produktstapel (36) bei ausgefahrener Ausrichtplatte (34) und entferntem Niederhalter (30);
• Absenken des vorderen Ende des angehobenen Teilstapels (42) auf den lagernden Produktstapel (36).

17. Verfahren nach den Ansprüchen 15 und 16, **dadurch gekennzeichnet, dass** der Einleggreifer (1) von einem Produktstapel (36) einen Teilstapel (42) entnimmt und auf einen Ablegestapel (45) vorzugsweise schonend und beschädigungsfrei ablegt.

18. Verfahren nach den Ansprüchen 15 und 17, **dadurch gekennzeichnet, dass** der Einleggreifer (1) in horizontaler Stellung an die Stirnseite des Produktstapels (36) heranfährt, wobei der Mitnehmerschlitten (5) in seiner vordersten Position auf den Gabeln (2, 3; 7, 8) verfährt, wobei die Ausrichtplatte (34) nach vorne ausgefahren ist und sich an die Stirnseite (39) des Produktstapels (36) anlegt und die Kartonagen des Teilstapels (42) ausrichtet.

19. Verfahren nach den Ansprüchen 15 bis 18, **dadurch gekennzeichnet, dass** der Einleggreifer (1) eine bogenförmige Kippbewegung mit einem Drehpunkt um ein schräg angeordnetes Nagelkissen (38) ausführt, welches somit in genauer Gegenüberstellung und planparallel auf die Stirnseite des Produktstapels (36) aufsetzt, wobei das Nagelkissen Teil einer Trenneinrichtung (37) ist und eine Anhebebewegung ausführt.

20. Verfahren nach Anspruch 19, **dadurch gekennzeichnet, dass** die Anhebebewegung des Nagelkissens (38) ein planparalleles Eindringen der einzelnen Nägel in die Stirnseiten der zu vereinzelnden Kartonagen ausbildet und das Aufreißen oder eine unerwünschte Relativbewegung zwischen den einzelnen Kartonagen und den Nägeln des Nagelkissens (38) vermeidet.

21. Verfahren nach den Ansprüchen 15 bis 20, **dadurch gekennzeichnet, dass** die bogenförmige Anhebebewegung des gesamten Einleggreifers (1) über einen Drehpunkt (50) den zu vereinzelnden Teilstapel (42) an einem hinteren Anschlag (47) anlegt und die einzelnen Kartonagenblätter im Teilstapel (42) gegeneinander aufschuppt und schonend vom hinteren Anschlag (47) abhebt.

22. Verfahren nach den Ansprüchen 16 und 21, **dadurch gekennzeichnet, dass** eine schräg gerichtete Aufsetzbewegung des Teilstapels (42) auf einen neuen Ablegestapel (45) erfolgt, wobei der Teilstapel (42) an seinem dem einleggreifer-fernen Ende an dem Anschlag (47) schräg angelegt wird und der Teilstapel (42) im Niederhalter (30) geklemmt bleibt.

23. Verfahren nach Anspruch 22, **dadurch gekennzeichnet, dass** mittels Entspannen des Niederhalters (30) bei Anliegen des Teilstapels (42) am Anschlag (47) der Einleggreifer (1) mit den Gabeln (2, 3, 7, 8) herausfährt, wenn das Nagelkissen (38) zurückfährt, während die Ausrichtplatte (34) gegen die Stirnseite des Teilstapels (42) anliegt.

24. Verfahren nach den Ansprüchen 15 bis 23, **dadurch gekennzeichnet, dass** der Mitnehmerschlitten (5) auf den Gurten (11) befestigt ist, wodurch eine Relativbewegung zwischen Mitnehmerschlitten (5) und den Gurten (11) vermieden wird.

25. Verfahren nach Anspruch 16, **dadurch gekennzeichnet, dass** der beaufschlagte Niederhalter (30) und ein Niederhalter-Druckstück (31) auf die Oberseite des Teilstapels (42) schonend aufgesetzt wird, um diesen festzuhalten, wobei eine Spannbewegung nach unten erfolgt.

26. Verfahren nach den Ansprüchen 15 bis 21, **dadurch gekennzeichnet, dass** der gesamte Einleggreifer (1) mittels entsprechender Ansteuerung des Roboterarmes in den Zwischenraum (43) zwischen dem Teilstapel (42) und dem Produktstapel einfährt, wobei es zu keiner Relativbewegung zwischen den einfahrenden Gabeln (2, 3; 7, 8) und der Oberfläche des untersten Kartonblattes im Teilstapel (42) kommt.

27. Verfahren nach Anspruch 26, **dadurch gekennzeichnet, dass** die Vorschubbewegung des Einleggreifers (1) synchronisiert ist mit der Vorschubbewegung der Gurte (11) auf den Gabeln (2, 3; 7, 8) und jegliche Relativverschiebung zwischen der Oberfläche der Gurte (11) und der Oberfläche (52) des untersten Kartonblattes vermieden wird, wodurch ein besonders schonendes und beschädigungsfreies Einfahren gewährleistet ist, während jegliche Relativverschiebung zwischen der Oberfläche der Gurte (11) und der Oberfläche (52) des untersten Kartonblattes vermieden und ein besonders schonendes und beschädigungsfreies Einfahren gewährleistet ist.

28. Verfahren nach den Ansprüchen 26 order 27, **dadurch gekennzeichnet dass** der der Mitnehmerschlitten (5) in den hinteren Bereich des Einleggreifers einfährt, wobei sich die Gabeln (2, 3) weitestmöglichst in den Zwischenraum (43) einschieben.

29. Verfahren nach Anspruch 16, **dadurch gekennzeichnet, dass** der Vertikalantrieb des Niederhalters (30) über eine Kolbenzylindereinheiten (25, 26) unterschiedlich hohe Teilstapel abhebt und auf einen Ablegestapel (45) auflegt.

30. Verfahren nach Anspruch 19, **dadurch gekennzeichnet, dass** die Trenneinrichtung (37) mit dem Nagelkissen (38) schräg an die Stirnseite des zu vereinzelnden Teilstapels (42) heranfährt und synchron mit allen Nägeln in die Stirnseiten der zu vereinzelnden Kartonblätter einfährt und ein schonendes Eindringen der Nägel ohne Beschädigung der Stirnseiten der einzelnen Kartonblätter aufweist.

31. Verfahren nach Anspruch 16, **dadurch gekennzeichnet, dass** der Ausrichtzylinder (32) und die Ausrichtplatte (34) eine Ausricht-Einrichtung ausbilden, welche die zu vereinzelnden Kartonblätter genau zusammenschiebt und zentriert auf dem Teilstapel (42) hält, wobei der Niederhalter (30) bei schnellen Bewegungen des geklemmten Teilstapels (42) ein unbeabsichtigtes Verschieben der Kartonblätter im Teilstapel (42) vermeidet.

32. Verfahren nach Anspruch 16, **dadurch gekennzeichnet, dass** die Verschiebung des Mitnehmerschlittens (5) auf den Längsträger (9) zusammen mit den Gurten (11) die effektiv sich in Eingriff mit dem Teilstapel (42) befindliche Länge der Gabeln (2, 3; 7, 8) frei einstellbar ausbildet, wobei bei geringeren Formattiefen des Produktstapels (36) oder des Ablegestapels (45) der Mitnehmerschlitten (5) nicht bis ganz in seinen hinteren Bereich in die Nähe des Querträgers (4) verfährt und eine kürzere, effektive und in Eingriff mit der stapelbefindlichen Länge der Gabeln (2, 3; 7, 8) ausbildet.

## Claims

1. Device for inserting flat articles, in particular cardboard or the like into processing machines, the device being configured as an insertion gripper (1) and substantially having a carrier part with two forks arranged in parallel, which are configured on the upper and lower side with belts or straps (11) extending in the longitudinal direction of the forks, the belts or straps being connected to a respective end of a transversely extending entrainer, and in that the insertion gripper (1) is connected to a robot arm, **characterised in that** the entrainer is configured as an entrainer slide (5) and is rigidly connected to the belts or straps (11) and **in that** the feed speed of the gripper (1) is synchronised with the drive speed of the belts or straps (11) on the forks (2, 3; 7, 8).

2. Device according to claim 1, **characterised in that** at least one separating mechanism (37) for separating a part stack (42) from a product stack (36) is arranged on the insertion gripper (1).

3. Device according to claim 1 or 2, **characterised in that** the carrier part has a crossbar (4) with an arranged crossbeam (18), which provides a rotatably mounted and motor driven drive shaft (13), which takes over the drive for the belts (11) on the forks (2, 3) and is fastened by means of a screw-on flange (19) to the front free end of a robot arm.

4. Device according to claim 3, **characterised in that** further forks (7, 8), which widen the useful width of the insertion gripper (1), can be flanged onto the drive shaft (13).

5. Device according to claims 3 or 4, **characterised in that** the forks (2, 3; 7, 8) are rigidly connected in the rear region to the crossbar (4) and have a longitudinal carrier (9), which, at its front free end, has a deflection mechanism (10) for guiding the belt (11) round, and at its rear end, a deflection roller (12), over which the belt (11) is deflected.

6. Device according to claim 5, **characterised in that** the entrainer slide (5) has a screw-on plate (22), with which it is securely screwed to the upper side of the belt (11), a counter-plate being arranged on the lower side of the belt (11), longitudinal guide (24) being configured on the forks (2, 3; 7, 8), which consists of roller elements, which engage in a longitudinal groove worked into the end faces of the longitudinal carrier (9).

7. Device according to claim 6, **characterised in that** the entrainer slide (5) has a crossbar (21), which is connected to the screw-on plates (22), and each transverse side has a cylinder housing (25), which is in each case connected to a vertical slide (27), which has a cross member (29) in the front region.

8. Device according to claim 7, **characterised in that** the free upper ends of piston rods (26) of a piston cylinder unit (25) engage on the vertical slide (27) with available guide rods, which form an improved vertical guidance of the crossbeam (27).

9. Device according to claims 7 or 8, **characterised in that** the cross member (29) has a rigidly arranged holding down pressure piece (31) and an aligning cylinder (32) for aligning a cardboard stack, which is connected to an aligning plate (34) by means of a piston rod (33), the cross member (29) and the holding down pressure piece (31) forming a holding down device (30), and a cutting cylinder (35) arranged in the rear region of the cross member (29), which acts with a front piston rod on a nail cushion, forming a cutting mechanism.

10. Device according to claims 1 to 9, **characterised in that** the separating mechanism (37) forms a particularly gentle handling of flat articles, a relative movement between the upper and lower side of the forks (2, 3; 7, 8) and the flat articles being prevented.

11. Device according to claims 1 to 10, **characterised in that** the forks (2, 3; 7, 8), synchronously with their feed movement, have a drive of the belts or straps (11).

12. Device according to claims 1 to 11, **characterised in that** the feed of the insertion gripper (1) is synchronous with the speed of the belts or straps (11).

13. Device according to claim 2, **characterised in that** the robot tilts a part of the total stack of the cardboard stack upwardly, the insertion gripper (1) moving along a curve and pivoting the rear end of the part stack (42) about a pivot point, whereby a uniform loading is formed when receiving and when inserting a part stack (42) from the product stack (36) of the cardboard.

14. Device according to claims 2 or 13, **characterised in that** the insertion gripper (1) can be screwed to a conventional robot arm, has no additional drive unit and can be disengaged from the part stack (42) and the product stack (36).

15. Method for operating a device, which places flat articles, in particular cardboard or the like in processing machines, wherein the device connected to a robot arm and configured as an insertion gripper (1) substantially has a carrier part with two forks arranged in parallel, which, on the upper and lower side provide belts or straps extending in the longitudinal direction of the fork, which are connected to a respective end of a transversely extending entrainer, **characterised in that** the entrainer configured as an entrainer slide (5) is rigidly connected to the belts or straps (11) and the feed speed of the gripper (1) is synchronised with the drive speed of the belts or straps (11) on the forks (2, 3; 7, 8).

16. Method according to claim 15, **characterised in that** the method has the following method steps:
• Moving up the insertion gripper (1) to the end face of a product stack and aligning an aligning plate (34) with this end side. The entrainer slide (5) is in its position displaced furthest forward on the forks (2, 3; 7, 8) (aligning);
• Moving a nail cushion (38) to the end face of the product stack (36), the insertion gripper (1) being raised at an angle to the horizontal (cutting);
• Lifting the part stack (42) at an angle from the remaining product stack (36) at its front end face;
• Moving the forks (2, 3; 7, 8) into the intermediate space between the part stack (42) and the remaining product stack (36) in the raised part stack (42);
• Clamping the part stack (42) by actuating a holding down device (30) with the insertion gripper (1) moved in;
• Raising the part stack (42) with the insertion gripper (1);
• Oblique feeding of the part stack (42) onto a depositing stack (45) in a curve;
• Placing the rear side - remote from the insertion gripper - of the part stack (42) on the depositing stack (45);
• Pulling out the forks (2, 3; 7, 8) out of the intermediate space between the part stack (42) and product stack (36) with the aligning plate (34) moved out and the holding down device (30) removed;
• Lowering the front end of the raised part stack (42) onto the supporting product stack (36).

17. Method according to claims 15 and 16, **characterised in that** the insertion gripper (1) removes a part stack (42) from a product stack (36) and deposits it preferably gently and without damage on a depositing stack (45).

18. Method according to claims 15 and 17, **characterised in that** the insertion gripper (1) in the horizontal position moves up to the end face of the product stack (36), wherein the entrainer slide (5) in its furthest forward position moves on the forks, wherein (2, 3; 7, 8) the aligning plate (34) is moved out to the front and rests on the end face (39) of the product stack (36) and aligns the cardboard of the part stack (42).

19. Method according to claims 15 to 18, **characterised in that** the insertion gripper (1) carries out an arcuate tilting movement with a pivot point about an obliquely arranged nail cushion (38), which therefore deposits in a precise opposing position and plane parallel on the end face of the product stack (36), the nail cushion being part of a separating mechanism (37) and carrying out a lifting movement.

20. Method according to claim 19, **characterised in that** the lifting movement of the nail cushion (38) forms a plane parallel penetration of the individual nails into the end faces of the pieces of cardboard to be separated and avoids tearing or an undesired relative movement between the individual pieces of cardboard and the nails of the nail cushion (38).

21. Method according to claims 15 to 20, **characterised in that** the arcuate lifting movement of the entire insertion gripper (1), via a pivot point (50), places the part stack (42) to be separated on a rear stop (47) and shingles the individual cardboard sheets in the part stack (42) with respect to one another and lifts them gently from the rear stop (47).

22. Method according to claims 16 and 21, **characterised in that** an obliquely directed depositing movement of the part stack (42) takes place onto a new depositing stack (45), the part stack (42) being placed obliquely at its end remote from the insertion gripper on the stop (47) and the part stack (42) remaining clamped in the holding down device (30).

23. Method according to claim 22, **characterised in that** the insertion gripper (1) moves out with the forks (2, 3; 7, 8) by means of releasing the holding down device (30) when resting the part stack (42) on the stop (47) if the nail cushion (38) moves back while the aligning plate (34) rests against the end face of the part stack (42).

24. Method according to claims 15 to 23, **characterised in that** the entrainer slide (5) is fastened to the belts (11), so a relative movement between the entrainer slide (5) and the belts (11) is avoided.

25. Method according to claim 16, **characterised in that** the loaded holding down device (30) and a holding down pressure piece (31) are gently placed on the upper side of the part stack (42) in order to hold it down, a downward clamping movement taking place.

26. Method according to claims 15 to 21, **characterised in that** the entire insertion gripper (1) moves by means of corresponding activation of the robot arm into the intermediate space (43) between the part stack (42) and the product stack, no relative movement taking place between the moving-in forks (2, 3; 7, 8) and the surface of the lowermost cardboard sheet.

27. Method according to claim 26, **characterised in that** the feed movement of the insertion gripper (1) is synchronised with the feed movement of the belts (11) on the forks (2, 3; 7, 8) and each relative displacement between the surface of the belts (11) and the surface (52) of the lowermost cardboard sheet is avoided, so a particularly gentle and damage-free movement in is ensured, while any relative movement between the surface of the belts (11) and the surface (52) of the lowermost cardboard sheet is avoided and a particularly gentle and damage-free movement in is ensured.

28. Method according to claims 26 or 27, **characterised in that** the entrainer slide (5) moves into the rear region of the insertion gripper, the forks (2, 3) being pushed as far as possible into the intermediate space (43).

29. Method according to claim 16, **characterised in that** the vertical drive of the holding down device (30), by means of a piston cylinder unit (25, 26), lifts part stacks of different heights and places them on a depositing stack (45).

30. Method according to claim 19, **characterised in that** the separating mechanism (37) with the nail cushion (38) moves obliquely up to the end face of the part stack (42) to be separated and moves synchronously with all the nails into the end faces of the cardboard sheets to be separated and has a gentle penetration of the nails without damaging the end faces of the individual cardboard sheets.

31. Method according to claim 16, **characterised in that** the aligning cylinder (32) and the aligning plate (34) form an aligning mechanism, which pushes the cardboard sheets to be separated precisely together and holds them centred on the part stack (42), the holding down device (30) avoiding unintentional displacement of the cardboard sheets in the part stack (42) upon rapid movements of the clamped part stack (42).

32. Method according to claim 16, **characterised in that** the displacement of the entrainer slide (5) on the longitudinal carrier (9) together with the belts (11) freely adjustably forms the length of the forks (2, 3; 7. 8) effectively engaged with the part stack (42), wherein, in the case of small format depths of the product stack (36) or of the depositing stack (45), the entrainer slide (5) does not move right into its rear region into the vicinity of the crossbar (4) and forms a shorter, effective length of the forks (2, 3; 7, 8) in engagement with the stack.

## Revendications

1. Dispositif pour placer des articles plats, notamment des cartonnages ou des articles analogues, dans des machines de traitement, le dispositif étant conçu comme une pince de placement (1) et comportant globalement une partie porteuse avec deux fourches qui sont agencées parallèlement et qui sont conçues avec, sur les faces supérieure et inférieure, des sangles ou courroies (11) qui s'étendent dans le sens de la longueur des fourches, les sangles ou courroies étant reliées chacune à une extrémité d'un élément d'entraînement et la pince de placement étant raccordée à un bras de robot, **caractérisé en ce que** l'élément d'entraînement s'étendant transversalement est conçu comme un chariot d'entraînement (5) et assemblé de manière fixe aux sangles ou courroies (11) et **en ce que** la vitesse d'avance de la pince (1) est synchronisée avec la vitesse d'entraînement des sangles ou courroies (11) sur les fourches (2, 3 ; 7, 8).

2. Dispositif selon la revendication 1, **caractérisé en ce qu'**au moins un dispositif de séparation (37) est agencé sur la pince de placement (1) pour séparer une pile partielle (42) d'une pile de produits (36).

3. Dispositif selon les revendications 1 et 2, **caractérisé en ce que** la partie porteuse comporte un support transversal (4) qui comprend une traverse (18) et qui prévoit un arbre moteur (13) logé rotatif et entraîné par moteur qui prend en charge l'entraînement des sangles (11) sur les fourches (2, 3) et qui est fixé au moyen d'une bride à visser (19) à l'extrémité avant libre d'un bras de robot.

4. Dispositif selon la revendication 3, **caractérisé en ce que** d'autres fourches (7, 8), qui étendent la largeur utile de la pince de placement (1), peuvent être fixées par bride sur l'arbre moteur (13).

5. Dispositif selon les revendications 3 ou 4, **caractérisé en ce que** les fourches (2, 3 ; 7, 8) sont assemblées de manière fixe dans la partie arrière au support transversal (4) et comportent un support longitudinal (9) qui comprend sur son extrémité avant libre un dispositif de renvoi (10) pour guider la sangle (11) et sur son extrémité arrière une poulie de renvoi (12) par laquelle la sangle (11) est renvoyée.

6. Dispositif selon la revendication 5, **caractérisé en ce que** le chariot d'entraînement (5) comporte une plaque à visser (22) avec laquelle il est vissé de manière fixe sur le dessus de la sangle (11), une contre-plaque étant agencée sur le dessous de la sangle (11), un système de guidage longitudinal (24) constitué d'éléments de roulement qui pénètrent dans une rainure longitudinale pratiquée sur les surfaces frontales du support longitudinal (9) étant alors ménagé sur les fourches (2, 3; 7, 8).

7. Dispositif selon la revendication 6, **caractérisé en ce que** le chariot d'entraînement (5) comporte un support transversal (21) qui est relié aux plaques à visser (22) et dont chaque côté transversal comporte un carter cylindrique (25) qui est relié à chaque fois un chariot vertical (27) qui comporte une traverse (29) dans la zone avant.

8. Dispositif selon la revendication 7, **caractérisé en ce que**, sur le chariot vertical (27), les extrémités supérieures libres de tiges de piston (26) d'une unité piston-cylindre (25) agissent avec des tiges conductrices présentes qui améliorent le guidage vertical de la traverse (27).

9. Dispositif selon les revendications 7 ou 8, **caractérisé en ce que** la traverse (29) comporte une pièce de pression en serre-flan (31) agencée de manière fixe et un cylindre d'alignement (32) qui est destiné à aligner une pile de cartons et qui est relié à une plaque d'alignement (34) au moyen d'une tige de piston (33), la traverse (29) et la pièce de pression en serre-flan (31) formant un serre-flan (30) et un cylindre de partage (35) qui est agencé dans la zone arrière du support transversal (29) et qui agit avec une tige de piston avant sur un coussin de pointes (38) formant alors un dispositif de partage.

10. Dispositif selon les revendications 1 à 9, **caractérisé en ce que** le dispositif de séparation (37) réalise une manipulation particulièrement soignée d'articles plats, tout mouvement relatif entre les dessus et dessous des fourches (2, 3; 7, 8) et l'article plat étant empêché.

11. Dispositif selon les revendications 1 à 10, **caractérisé en ce que** les fourches (2, 3 ; 7, 8) comportent, en synchronisation avec leur mouvement d'avance, un entraînement des sangles ou courroies (11).

12. Dispositif selon les revendications 1 à 11, **caractérisé en ce que** l'avance de la pince de placement (1) est conçue pour être synchronisée avec la vitesse des sangles ou courroies (11).

13. Dispositif selon la revendication 2, **caractérisé en ce que** le robot bascule vers le haut une partie de la pile totale de la pile de cartonnages, la pince de placement (1) se déplaçant le long d'une courbe en arc et l'extrémité arrière de la pile partielle (42) pivotant autour d'un point de rotation, ce qui donne une charge uniforme lors du prélèvement comme lors du placement d'une pile partielle (42) de la pile de produits (36) des cartonnages.

14. Dispositif selon les revendications 2 ou 13, **caractérisé en ce que** la pince de placement (1) peut être vissée sur un bras de robot classique, ne comporte pas d'unité d'entraînement supplémentaire et peut être amenée à l'écart de la pile partielle (42) et de la pile de produits (36).

15. Procédé pour faire fonctionner un dispositif qui place des articles plats, notamment des cartonnages ou des articles analogues, dans des machines de traitement, le dispositif conçu comme une pince de placement (1) et raccordé un bras de robot comportant globalement une partie porteuse avec deux fourches (2, 3 ; 7, 8) qui sont agencées parallèlement et qui sont conçues avec, sur les faces supérieure et inférieure, des sangles ou courroies qui s'étendent dans le sens de la longueur des fourches et qui sont reliées chacune à une extrémité d'un élément d'entraînement s'étendant transversalement, **caractérisé en ce que** l'élément d'entraînement conçu comme un chariot d'entraînement (5) est assemblé de manière fixe aux sangles ou courroies (11) et **en ce que** la vitesse d'avance de la pince (1) est synchronisée avec la vitesse d'entraînement des sangles ou courroies (11) sur les fourches (2, 3 ; 7, 8).

16. Procédé selon la revendication 15, **caractérisé en ce que** le procédé comporte les étapes suivantes :
- Déplacement de la pince de placement (1) jusqu'au côté frontal d'une pile de produits et alignement d'une plaque d'alignement (34) contre ce côté frontal. Le chariot d'entraînement (5) est alors dans sa position la plus avancée sur les fourches (2, 3 ; 7, 8) (malignement) ;
- Déplacement d'un coussin de pointes (38) jusqu'au côté frontal de la pile de produits (36), la pince de placement (1) étant alors soulevée avec un certain angle par rapport à l'horizontale (partage) ;
- Soulèvement de la pile partielle (42) par son côté frontal avant avec un certain angle par rapport à la pile de produits restante (35) ;
- Introduction des fourches (2, 3 ; 7, 8) dans l'espace entre la pile partielle (42) et la pile de produits restante (36) alors que la pile partielle (42) est soulevée ;
- Serrage de la pile partielle (42) par actionnement d'un serre-flan (30) alors que la pince de placement (1) est introduite ;
- Enlèvement de la pile partielle (42) avec la pince de placement (1) ;
- Amenée oblique de la pile partielle (42) sur une pile de réception (45) selon une courbe en arc ;
- Pose du côté arrière - éloigné de la pince de placement - de la pile partielle (42) sur la pile de réception (45) ;
- Retrait des fourches (2, 3 ; 7, 8) hors de l'espace entre la pile partielle (42) et la pile de produits (36) alors que la plaque d'alignement (34) est sortie et le serre-flan (30) éloigné ;
- Abaissement de l'extrémité avant de la pile partielle soulevée (42) sur la pile de produits (36) de stockage.

17. Procédé selon les revendications 15 et 16, **caractérisé en ce que** la pince de placement (1) prélève d'une pile de produits (36) une pile partielle (42) et la dépose de préférence avec ménagement et sans dommage sur une pile de réception (45).

18. Procédé selon les revendications 15 et 17, **caractérisé en ce que** la pince de placement (1) est déplacée en position horizontale jusqu'au côté frontal de la pile de produits (36), le chariot d'entraînement (5) se déplaçant dans sa position la plus avancée sur les fourches (2, 3 ; 7, 8), la plaque d'alignement (34) étant sortie vers l'avant, s'appuyant alors contre le côté frontal (39) de la pile de produits (36) et alignant les cartonnages de la pile partielle (42).

19. Procédé selon les revendications 15 à 18, **caractérisé en ce que** la pince de placement (1) exécute un mouvement de basculement en arc avec un point de rotation autour d'un coussin de pointes (38) qui est agencé obliquement et qui repose ainsi exactement en face du côté frontal de la pile de produits (36) et selon un plan parallèle à celui-ci, le coussin de pointes faisant partie d'un dispositif de séparation (37) et exécutant un mouvement de soulèvement -

20. Procédé selon la revendication 19, **caractérisé en ce que** le mouvement de soulèvement du coussin de pointes (38) produit une pénétration, parallèle au plan, des pointes individuelles dans les côtés frontaux des cartonnages à individualiser et **en ce qu'**il évite tout déchirement ou tout mouvement relatif inopportun entre les cartonnages individuels et les pointes du coussin à pointes (38).

21. Procédé selon les revendications 15 à 20, **caractérisé en ce que** le mouvement de soulèvement en arc de l'ensemble de la pince de placement (1) autour d'un point de rotation (50) appuie la pile partielle à individualiser (42) contre une butée arrière (47), superpose les feuilles de cartonnage individuelles dans la pile partielle (42) et les soulève avec ménagement de la butée arrière (47).

22. Procédé selon les revendications 16 et 21, **caractérisé en ce qu'**il s'effectue un mouvement oblique de dépôt de la pile partielle (42) sur une nouvelle pile de réception (45), la pile partielle (42) étant appuyée obliquement, avec son extrémité éloignée de la pince de placement, contre la butée (37) et la pile partielle (42) restant coincée dans le serre-flan (30).

23. Procédé selon la revendication 22, **caractérisé en ce que**, au moyen d'un desserrage du serre-flan (30) lors de la pose de la pile partielle (42) contre la butée (47), la pince de placement (1) avec les fourches (2, 3 ; 7, 8) sort lorsque le coussin de pointes (38) revient en arrière tandis que la plaque d'alignement (34) s'appuie contre le côté frontal de la pile partielle (42).

24. Procédé selon les revendications 15 à 23, **caractérisé en ce que** le chariot d'entraînement (5) est fixé sur les sangles (11), ce qui évite tout mouvement relatif entre le chariot d'entraînement (5) et les sangles (11).

25. Procédé selon la revendication 16, **caractérisé en ce que** le serre-flan (30) en action et une pièce de pression en serre-flan (31) sont posés avec ménagement sur le dessus de la pile partielle (42) pour maintenir celle-ci, un mouvement de serrage vers le bas s'effectuant alors.

26. Procédé selon les revendications 15 à 21, **caractérisé en ce que** l'ensemble de la pince de placement (1) pénètre au moyen d'une commande appropriée du bras de robot dans l'espace (43) entre la pile partielle (42) et la pile de produits, tout mouvement relatif entre les fourches (2, 3 ; 7, 8) avançant et la surface de la feuille de carton la plus basse dans la pile partielle (42) étant impossible.

27. Procédé selon la revendication 26, **caractérisé en ce que** le mouvement d'avance de la pince de placement (1) est synchronisé avec le mouvement d'avance des sangles (11) sur les fourches (2, 3 ; 7, 8) et **en ce que** tout déplacement relatif entre la surface des sangles (11) et la surface (52) de la feuille de carton la plus basse est évité, ce qui garantit une introduction avec ménagement et sans dommage tandis que tout déplacement relatif entre la surface des sangles (11) et la surface (52) de la feuille de carton la plus basse est évité et qu'une introduction avec ménagement et sans dommage est garantie.

28. Procédé selon les revendications 26 ou 27, **caractérisé en ce que** le chariot d'entraînement (5) entre dans la zone arrière de la pince de placement, les fourches (2, 3) se glissant le plus loin possible dans l'espace (43).

29. Procédé selon la revendication 16, **caractérisé en ce que** l'entraînement vertical du serre-flan (30) par l'intermédiaire d'une unité piston-cylindre (25, 26) soulève des piles partielles de hauteurs différentes et les dépose à chaque fois sur une pile de réception (45).

30. Procédé selon la revendication 19, **caractérisé en ce que** le dispositif de séparation (37) avec le coussin à pointes (38) est déplacé obliquement jusqu'au côté frontal de la pile partielle à individualiser (42), s'introduit de manière synchrone avec toutes les pointes dans les côtés frontaux des feuilles de carton à individualiser et permet une pénétration des pointes avec ménagement sans endommager les côtés frontaux des feuilles de carton individuelles.

31. Procédé selon la revendication 16, **caractérisé en ce que** le cylindre d'alignement (32) et la plaque d'alignement (34) constituent un dispositif d'alignement qui pousse ensemble précisément les feuilles de carton à individualiser et les maintient centrées sur la pile partielle (42), le serre-flan (30) évitant lors de mouvements rapides de la pile partielle (42) coincée tout déplacement inopportun des feuilles de carton dans la pile partielle (42).

32. Procédé selon la revendication 16, **caractérisé en ce que** le déplacement du chariot d'entraînement (5) sur le support longitudinal (9) conjointement avec les sangles (11) constitue de manière librement réglable la longueur des fourches (2, 3 ; 7, 8) qui se trouve en prise avec la pile partielle (42) de sorte que, en présence de piles de produits (36) ou de piles de réception (45) ayant des formats de petite profondeur, le chariot d'entraînement (5) ne se déplace pas entièrement avec sa zone arrière jusqu'à proximité du support transversal (4) et constitue une longueur des fourches (2, 3 ; 7, 8) plus courte, efficace et en prise avec la pile.
